# EUROPEAN PATENT APPLICATION

(11) **EP 4 379 454 A1**
(43) Date of publication of application: **05.06.2024**
(21) Application number: 21951333.0
(22) Date of filing: 30.07.2021
(51) Int. Cl.: G02B 27/42, G03B 17/54, G03B 21/14, G01C 11/00

(54) **STRUCTURED LIGHT PROJECTION DEVICE AND DEPTH CAMERA**

(71) Applicant: Huawei Technologies Co., Ltd., Shenzhen, Guangdong 518129 (CN)
(72) Inventor: YANG, Jinghuan, Shenzhen, Guangdong 518129 (CN); LI, Teng, Shenzhen, Guangdong 518129 (CN)
(74) Representative: Thun, Clemens
(86) International application number: PCT/CN2021/109558
(87) International publication number: WO 2023/004737

(57) **Abstract**

A structured light projection apparatus (1000) and a depth camera (10) are provided. The structured light projection apparatus (1000) includes: a light transmitting mechanism (1), configured to transmit first light; an angle adjustment mechanism (2), configured to adjust an angle of the first light; and a diffraction mechanism (3), configured to convert the first light that passes through the angle adjustment mechanism (2) into second light with a preset pattern. In this way, a field of view range of detection can be increased, and spatial density of a preset pattern of structured light can be ensured, thereby increasing detection precision of depth information.

## Description

### TECHNICAL FIELD

This application relates to the field of intelligent vehicles, and in particular, to a structured light projection apparatus, a depth camera, and a control method and control apparatus for a structured light projection apparatus.

### BACKGROUND

To obtain information about an object in space to implement, for example, facial recognition, gesture recognition, and action recognition, depth information of the object becomes a key element for improving a perception capability of the object in space.

Currently, the depth information of the object is usually obtained in an active manner and a passive manner. In the passive manner, three-dimensional information of the object is obtained based on reflection of ambient light by the object, for example, a binocular vision technology. In the active manner, a light signal is transmitted to the object, and three-dimensional information of the object is obtained by receiving a signal returned by the detected object, for example, a time of flight (Time of Flight, ToF) technology and a structured light technology.

In the binocular vision technology, two images of a detected object are obtained from different positions by using an imaging device, and three-dimensional information of the object is obtained by calculating a position deviation between corresponding points in the images. However, this manner has a high requirement on ambient light. In a vehicle cockpit with a complex lighting condition, precise depth information may not be obtained.

In the ToF technology, a modulated continuous light pulse signal is transmitted to an object, and then reflection light is received by using a sensor, and depth information is obtained by performing calculation and conversion by using a time difference between the modulated continuous light pulse signal and the reflection light. However, in this manner, when a detection range is large, point clouds may not be dense enough; and when a detection distance is long, light intensity of the reflection light may be insufficient. As a result, detection precision is decreased.

In the structured light technology, a coding pattern is projected on a target object, and depth information is determined by calculating deformation of the coding pattern. However, in this manner, when a detection range is large, coding patterns may also not be dense enough; and when a detection distance is long, a signal-to-noise ratio of the coding pattern may decrease. In addition, when there are a large quantity of objects in space, the coding pattern cannot be projected on the target object in a targeted manner, and another object in the detection range causes interference to the depth information of the target object, which also causes a decrease in detection precision.

Therefore, how to ensure that a field of view range of detection is large enough and ensure precision of depth information becomes a problem that urgently needs to be resolved in the industry.

### SUMMARY

This application provides a structured light projection apparatus, a depth camera, and a control method and control apparatus for a structured light projection apparatus, to increase detection precision of depth information and increase a detection field of view range.

A first aspect of this application provides a structured light projection apparatus, and the structured light projection apparatus includes: a light transmitting mechanism, configured to transmit first light; an angle adjustment mechanism, configured to adjust an angle of the first light; and a diffraction mechanism, configured to convert the first light that passes through the angle adjustment mechanism into second light with a preset pattern.

Adjusting the angle of the first light is adjusting the angle of the first light relative to a transmitting direction of the first light, so that the angle of the first light deviates from the transmitting direction of the first light.

Based on the foregoing disposition, the angle adjustment mechanism adjusts the angle of the first light, so that an emergent range of the first light is increased, and a detection field of view of the light projection apparatus is increased. By adjusting the angle of the first light, for example, a projection position of the first light can be correspondingly adjusted based on a shape of a target area, so that the preset pattern can cover the target area, and precision of the depth information is increased.

In a possible implementation, the apparatus further includes: a size adjustment mechanism, configured to adjust a size of the second light, so that the second light covers the target area.

By using the foregoing structure, the size adjustment mechanism adjusts a size of the preset pattern, so that the size of the preset pattern can be adjusted, for example, based on a size of the target area, and density of the preset pattern in the target area is maintained within a specific range. This avoids a problem that a part of the target area is not covered by the preset pattern because the preset pattern is excessively sparse, and ensures detection precision of the structured light projection apparatus.

In a possible implementation, the angle adjustment mechanism includes a first adjustment module and a second adjustment module, and the second adjustment module is located between the first adjustment module and the diffraction mechanism; the first adjustment module is configured to adjust the first light in a first angle range; and the second adjustment module is configured to adjust the first light in a second angle range, where the second angle range is greater than the first angle range.

Based on the foregoing disposition, the first adjustment module adjusts the angle of the first light in a small range (for example, 0° to 5°) with high precision; and the second adjustment module adjusts the angle of the first light in a large range (0° to 45°). The second adjustment module and the first adjustment module are combined, to implement high-precision and largerange adjustment of a transmitting angle of the first light.

In a possible implementation, the first adjustment module is further configured to split the first light into a plurality of light beams.

Based on the foregoing disposition, beam splitting of transmitted light is implemented, so that the first light can cover different target areas, interference caused by transmitting the first light to another area is avoided, and a signal-to-noise ratio is increased.

In a possible implementation, the first adjustment module includes a liquid crystal phased array. In a possible implementation, the size adjustment mechanism includes a liquid crystal lens.

In a possible implementation, the structured light projection apparatus is installed in one or more of the following positions in a vehicle cockpit: a center console, a position of a roof light switch, a side that is of a front seat and that faces a rear seat, and a central rearview mirror.

In a possible implementation, the structured light projection apparatus is installed outside a vehicle cockpit, in a mobile phone, or in a smart home terminal.

A second aspect of this application provides a depth camera, and the depth camera includes a camera and the structured light projection apparatus provided in the first aspect of this application and any one of the possible implementations of the first aspect.

A third aspect of this application provides a control method for a structured light projection apparatus, and the method includes: obtaining an image of a target object on which first structured light is projected; determining, based on the image, an image position of the target object in the image and depth information corresponding to the image position; and determining a transmitting angle of second structured light based on the image position and the depth information, so that the second structured light transmitted by the structured light projection apparatus covers a target area that is of the target object and that corresponds to the image position, where the structured light projection apparatus includes: a light transmitting mechanism configured to transmit first light, an angle adjustment mechanism configured to adjust an angle of the first light, and a diffraction mechanism configured to convert the first light that passes through the angle adjustment mechanism into structured light with a preset pattern.

Based on the foregoing disposition, a projection area of the structured light is controlled, so that a projection direction of the structured light can be adjusted based on the position of the target area.

In a possible implementation, the first structured light is projected in a preset seat area in a vehicle cockpit.

Based on the foregoing disposition, a coverage area of the first structured light in the cockpit can be reduced, interference caused by transmitting the first structured light to another area in the cockpit is avoided, and a signal-to-noise ratio is increased.

In a possible implementation, before the obtaining an image of a target object on which first structured light is projected, the method further includes: obtaining a position of the target object in the vehicle cockpit; determining, based on the position, a preset seat area in which the target object is located; and transmitting the first structured light to the preset seat area.

Based on the foregoing disposition, the first structured light may be transmitted based on the preset seat area in which the position of the target obj ect is located, so that the first structured light covers only the preset seat area, thereby reducing a coverage area of the first structured light, avoiding interference caused by transmitting the first structured light to another area in the cockpit, and increasing a signal-to-noise ratio.

In a possible implementation, the position of the target object in the vehicle cockpit is obtained based on one or more of the following: seat pressure information, seat belt fastening information, and vital sign information.

A fourth aspect of this application provides a control apparatus for a structured light projection apparatus, and the control apparatus includes: an obtaining module, configured to obtain an image of a target object on which first structured light is projected; a determining module, configured to determine, based on the image, an image position of the target object in the image and depth information corresponding to the image position; and a control module, configured to determine a transmitting angle of second structured light based on the image position and the depth information, so that the second structured light transmitted by the structured light projection apparatus covers a target area that is of the target object and that corresponds to the image position, where the structured light projection apparatus includes: a light transmitting mechanism configured to transmit first light, an angle adjustment mechanism configured to adjust an angle of the first light, and a diffraction mechanism configured to convert the first light that passes through the angle adjustment mechanism into structured light with a preset pattern.

In a possible implementation, the first structured light is projected in a preset seat area in a vehicle cockpit.

In a possible implementation, the obtaining module is further configured to obtain a position of the target object in the vehicle cockpit; the determining module is further configured to determine, based on the position, the preset seat area in which the target object is located; and the control module is further configured to transmit the first structured light to the preset seat area.

In a possible implementation, the position of the target object in the vehicle cockpit is obtained based on one or more of the following: seat pressure information, seat belt fastening information, and vital sign information.

A fifth aspect of this application provides a structured light projection system, and the system includes: the structured light projection apparatus provided in the first aspect of this application, a camera, and the control apparatus for the structured light projection apparatus provided in the fourth aspect of this application, where the camera is configured to collect an image.

In a possible implementation, the control apparatus is in signal connection with the structured light projection apparatus by using an in-vehicle Ethernet interface, a controller local area network interface, or a differential signal interface.

In a possible implementation, the camera is in signal connection with the control apparatus by using an in-vehicle Ethernet interface, a controller local area network interface, or a differential signal interface.

A sixth aspect of this application provides a computing device, and the device includes a processor and a memory, where the processor is coupled to the memory, the memory is configured to store a program or instructions, and when the program or the instructions are executed by the processor, the computing device is enabled to perform the control method for the structured light projection apparatus provided in the third aspect of this application.

A seventh aspect of this application provides a computer-readable storage medium, where the computer-readable storage medium stores program instructions, and when the program instructions are executed by a computer, the computer is enabled to perform the control method for the structured light projection apparatus provided in the third aspect of this application.

An eighth aspect of this application provides a computer program product, the computer program product includes program instructions, and when the program instructions are executed by a computer, the computer is enabled to perform the control method for the structured light projection apparatus provided in the third aspect of this application.

By disposing the first adjustment module, the first light can be adjusted in a small angle range, and high-precision adjustment of the first light can be implemented, so that the preset pattern can cover the target area. The first adjustment module is further disposed to split the first light, so that when there are a plurality of target objects, the coding pattern is projected on a position of the target object, and an area of the coding pattern projected on another object is reduced, thereby reducing interference caused by the another object in a detection range to the target object, and increasing a signal-to-noise ratio.

By disposing the second adjustment module, when the target object is far away from the structured light projection apparatus, the transmitting angle of the first light can be reduced in a large range, and spatial density of a coding image can be maintained; and when the target object is close to the structured light projection apparatus, the transmitting range of the first light can be increased, and the first light can be adjusted within a large angle range.

By disposing the size adjustment mechanism, the detection range of the structured light projection apparatus can be increased, and density of the coding pattern can be adjusted, to avoid a decrease in detection precision caused by an excessively sparse coding pattern.

### BRIEF DESCRIPTION OF DRAWINGS

FIG. 1 is a schematic diagram of an application scenario of a structured light projection apparatus and a depth camera according to an embodiment of this application;
FIG. 2 is a schematic diagram of another application scenario of a structured light projection apparatus and a depth camera according to an embodiment of this application;
FIG. 3 is a schematic diagram of a structure of a structured light projection apparatus according to an embodiment of this application;
FIG. 4 and FIG. 5 are schematic diagrams of a structure of a first adjustment module of a structured light projection apparatus according to an embodiment of this application;
FIG. 6A and FIG. 6B are schematic diagrams of a structure of a second adjustment module of a structured light projection apparatus according to an embodiment of this application;
FIG. 7 and FIG. 8 are schematic diagrams of a structure of a size adjustment module of a structured light projection apparatus according to an embodiment of this application;
FIG. 9 is a schematic diagram of a structure of a depth camera that has a structured light projection apparatus according to an embodiment of this application;
FIG. 10 is a flowchart of a control method for a structured light projection apparatus according to an embodiment of this application;
FIG. 11 is a schematic diagram of modules of a control apparatus for a structured light projection apparatus according to an embodiment of this application;
FIG. 12 is a schematic diagram of a structure of a structured light projection system according to an embodiment of this application; and
FIG. 13 is a schematic diagram of modules of a computing device according to an embodiment of this application.

It should be understood that, in the foregoing schematic diagrams of structures, sizes and forms of the block diagrams are used only for reference, and should not constitute an exclusive interpretation of embodiments of this application. A relative position and an inclusion relationship between block diagrams presented in the schematic diagrams of structures merely schematically indicate a structural association between block diagrams, but do not limit a physical connection manner in embodiments of this application.

### DESCRIPTION OF EMBODIMENTS

The following further describes technical solutions provided in this application by using embodiments with reference to the accompanying drawings. It should be understood that system architectures and service scenarios in embodiments of this application are mainly intended to describe possible implementations of the technical solutions of this application, and should not be construed as a unique limitation on the technical solutions of this application. A person of ordinary skill in the art may learn that the technical solutions provided in this application are also applicable to a similar technical problem as a system structure evolves and a new service scenario emerges.

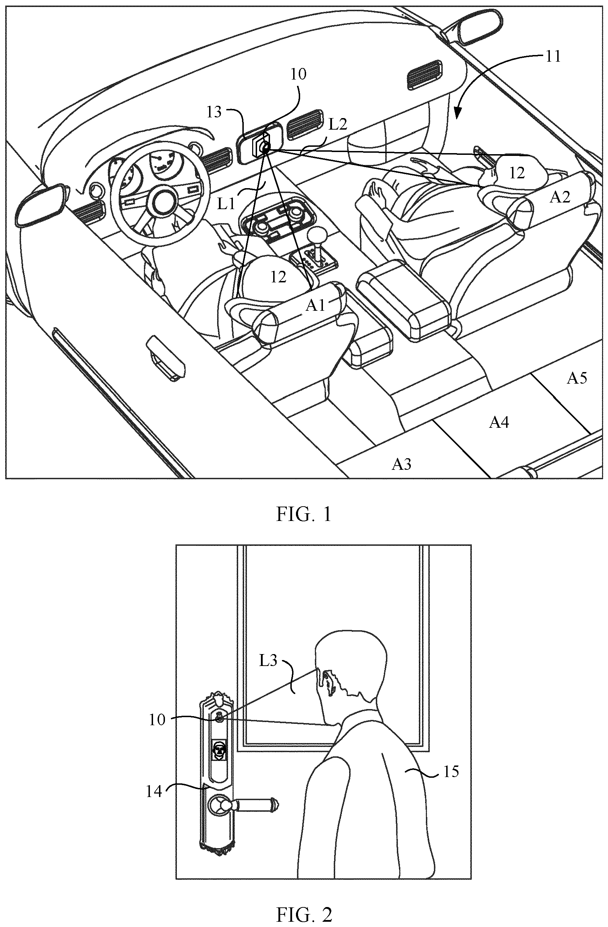

FIG. 1 is a schematic diagram of an application scenario of a structured light projection apparatus and a depth camera according to an embodiment of this application. As shown in FIG. 1, a depth camera 10 provided in this embodiment of this application may be used in, for example, a vehicle cockpit system, and is configured to recognize a face of a user 12 in a cockpit 11, to determine an identity of the user 12 or whether the user 12 wearily drives, or is configured to recognize a gesture of the user 12 in the cockpit 11, to determine an intention and an instruction of the user 12, or is configured to determine a line of sight of the user 12. The structured light projection apparatus may be installed in one or more of the following positions: a center console, a position of a roof light switch, a side that is of a front seat and that faces a rear seat, and a central rearview mirror. In the example shown in FIG. 1, the depth camera 10 may be disposed on the center console 13. The depth camera 10 includes a structured light projection apparatus and a camera. The structured light projection apparatus may transmit structured light L1 and L2 with a preset pattern (also referred to as a coding pattern in this application) to an area in which a head position of a passenger 12 in the cockpit 11 is located. The camera obtains a head image of the user 12 with the projected structured light, a controller obtains a deformation status of the structured light L1 and L2 at the head position of the user 12 based on the head image of the user 12, to obtain depth information of a head of the user 12.

FIG. 2 is a schematic diagram of another application scenario of the structured light projection apparatus and the depth camera according to an embodiment of this application. As shown in FIG. 2, the depth camera 10 provided in this embodiment of this application may be further used in a smart home terminal system, for example, used in an intelligent lock system 14. The structured light projection apparatus may transmit structured light L3 with a preset pattern to an area in which a face position of a user 15 is located. The camera obtains a face image of the user 15 with the projected structured light. The intelligent lock system obtains a deformation status of the coding pattern at the face position of the user 15 based on the face image of the user 15, to recognize a face of the user 15 and further determine an identity of the user 15.

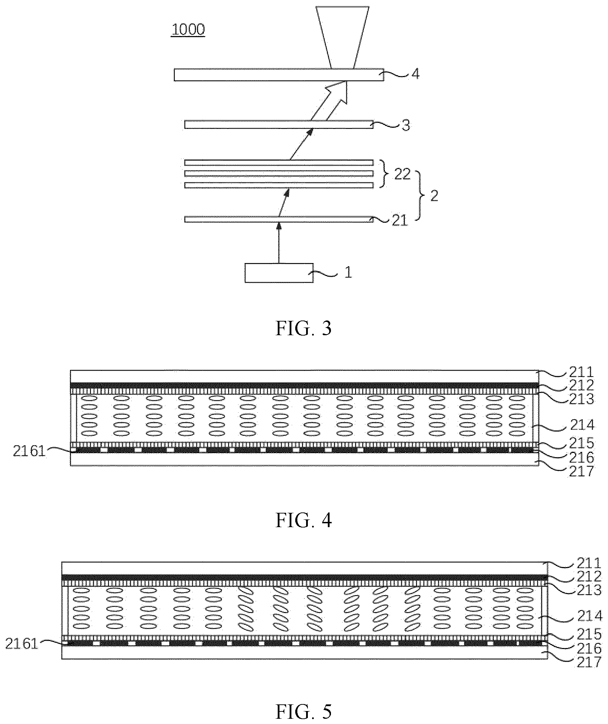

FIG. 3 is a schematic diagram of a structure of a structured light projection apparatus according to an embodiment of this application. As shown in FIG. 3, a structured light projection apparatus 1000 according to an embodiment of this application includes: a light transmitting mechanism 1 configured to transmit first light, an angle adjustment mechanism 2 that is configured to adjust an angle of the first light and that is located on an outlet optical path of the light transmitting mechanism 1, a diffraction mechanism 3 that is configured to convert light that passes through the angle adjustment mechanism 2 into second light with a preset pattern and that is located on an outlet optical path of the angle adjustment mechanism 2, and a size adjustment mechanism 4 that is configured to adjust a size of the preset pattern and that is located on an outlet optical path of the diffraction mechanism 3.

Adjusting the angle of the first light is adjusting the angle of the first light relative to a transmitting direction of the first light, so that the angle of the first light deviates from the transmitting direction of the first light. For example, the first light is deviated by 35° relative to the transmitting direction of the first light.

As shown in FIG. 3, the angle adjustment mechanism 2 may include a first adjustment module 21 and a second adjustment module 22. The first adjustment module 21 is configured to adjust light in a first angle range. The second adjustment module 22 is located between the first adjustment module 21 and the diffraction mechanism 3, and is configured to adjust light in a second angle range. The second angle range is greater than the first angle range. The first angle range may be, for example, 0° to 5°, and the second angle range may be, for example, 0° to 45°.

In some embodiments, as shown in FIG. 4 and FIG. 5, the first adjustment module 21 may be a liquid crystal phased array, and the liquid crystal phased array may include a first substrate 211, a first electrode 212, a first orientation unit 213, a liquid crystal layer 214, a second orientation unit 215, a second electrode 216, and a second substrate 217 that are sequentially attached and parallel to each other. The first orientation unit 213 and the second orientation unit 215 are configured to enable liquid crystal molecules in the liquid crystal layer 214 to be arranged at a preset angle. An electric potential difference may be formed between the first electrode 212 and the second electrode 216. As shown in FIG. 4, a cross section of the liquid crystal molecule in the liquid crystal layer 214 may be, for example, an ellipse. When the electric potential difference is zero, a major axis of the cross section of the liquid crystal molecule may be parallel to a plane in which the first substrate 211 is located, or the major axis of the cross section of the liquid crystal molecule may be at a preset angle relative to the first substrate 211 based on shapes of the first orientation unit 213 and the second orientation unit 215. When there is an electric potential difference between the first electrode 212 and the second electrode 216, as shown in FIG. 5, the liquid crystal molecule in the liquid crystal layer 214 deflects. An arrangement direction of the liquid crystal molecule affects a refractive index of the liquid crystal layer 214, so that a phase of light transmitted by the light transmitting mechanism 1 changes when the light is transmitted from the liquid crystal phased array. When the phase distribution changes linearly in space, a light beam angle is deflected. In some embodiments, the second electrode 216 may include a plurality of electrode units 2161, and a voltage is applied to each electrode unit 2161, so that each electrode unit 2161 forms an independent electromotive force difference with the first electrode 212, the arrangement direction of the liquid crystal molecule is changed, and the light beam can be projected on the target object at different angles.

In some embodiments, the first adjustment module may alternatively be an MEMS (Micro-Electro-Mechanical System, MEMS) oscillating mirror. The MEMS oscillating mirror may include, for example, an MEMS lens and a coil configured to drive the MEMS lens. The coil is disposed around the lens, and an electromagnetic force is generated around the MEMS lens by powering on the coil, so that the MEMS lens is twisted, and an angle of the first light irradiated on the MEMS lens is deflected. Certainly, the MEMS oscillating mirror may alternatively be, for example, an electrostatic-driven MEMS oscillating mirror, a piezoelectric-driven MEMS oscillating mirror, or a thermoelectric-driven MEMS oscillating mirror. This is not limited in this application.

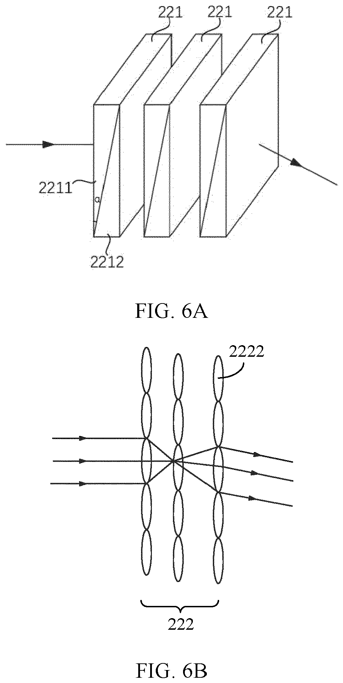

As shown in FIG. 6A, the second adjustment module 22 may be a birefringent prism. The birefringent prism may include a plurality of birefringent prism units 221. FIG. 6A shows three birefringent prism units 221. However, this application is not limited thereto. The plurality of birefringent prism units 221 are sequentially arranged in a straight line in a light outlet direction of the first adjustment module 21. Each birefringent prism unit 221 may include two birefringent crystals: a birefringent crystal 2211 and a birefringent crystal 2212. The birefringent crystal may be a trilateral column, and has a light inlet surface and a light outlet surface. A cross section perpendicular to the light inlet surface and the light outlet surface may be a triangle or a trapezoid. In the example shown in FIG. 6A, the cross section is a triangle. Optical axes of the two birefringent crystals 2211 and 2212 are perpendicular to each other. By designing wedge angles α of the birefringent crystals 2211 and 2212 of the birefringent prism, an angle of an emergent light beam can be controlled, to implement angle adjustment.

In some embodiments, the second adjustment module may alternatively be a micro lens array. As shown in FIG. 6B, a micro lens array 222 may include, for example, lens units 2222 arranged in an array. After a light beam incident to the micro lens array 222 is refracted by the lens units 2222, an angle of an emergent light beam is deflected, to adjust an angle of the light beam.

By disposing the first adjustment module, for example, deflection adjustment of a light beam in a range of 0° to 5° can be implemented, to implement small-angle and high-precision adjustment of an angle of a light beam. By disposing the second adjustment module, for example, deflection adjustment of a light beam in a range of 0° to 45° can be implemented, to implement large-angle and wide-range adjustment of an angle of a light beam. In this way, a coverage area of the preset pattern can be adjusted based on a position and a shape of the target object.

In some embodiments, a voltage of a motor unit of the first adjustment module is adjusted, so that the liquid crystal molecule is deflected, and the first light transmitted from the first adjustment module can be deflected by, for example, 3°. After the first light that is deflected by 3° passes through the three birefringent prism units, the first light may be deflected by 15°, 30°, and 45° in sequence based on different wedge angles α of the birefringent crystals, so that the light beam is deflected by 45°.

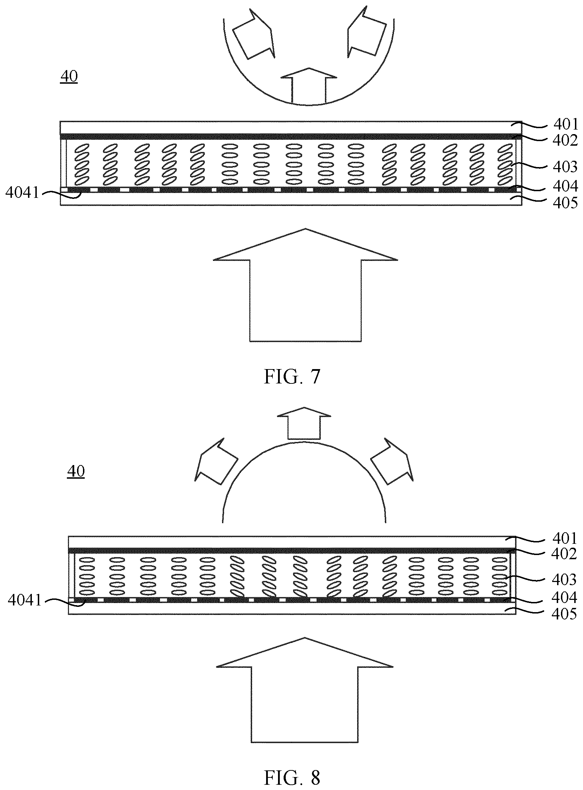

As shown in FIG. 7 and FIG. 8, the size adjustment mechanism may include a liquid crystal lens 40. The liquid crystal lens 40 may be cylindrical, and may include a first substrate 401, a first electrode 402, a liquid crystal layer 403, a second electrode 404, and a second substrate 405 that are sequentially attached. The second electrode 404 includes a plurality of electrode units 4041, and a voltage is set on each electrode unit 4041, so that each electrode unit 4041 and the first electrode 402 form an independent electric potential difference, and a focal length value of the liquid crystal lens 40 is adjusted based on a requirement. Different voltages are applied to different electrode units, so that the liquid crystal layer 403 forms a phase distribution that is similar to a lens and that changes from a center to a periphery. This phase distribution change can implement adjustment of a divergence angle of the projected light, thereby expanding or reducing the coverage area of the preset pattern. For example, as shown in FIG. 8, a voltage is applied to an electrode unit 4041 that is in the second electrode 404 and that is close to a circle center, so that liquid crystals present different distributions, thereby expanding the coverage area of the preset pattern. As shown in FIG. 7, a voltage is applied to an electrode unit 4041 that is in the second electrode 404 and that is far away from the circle center, so that the liquid crystals present different distributions, thereby reducing the coverage area of the preset pattern.

It should be noted that, although the electrode units shown in FIG. 7 and FIG. 8 are distributed in an annular manner, this application is not limited thereto. The electrode units may be alternatively disposed on the second substrate in another manner, provided that it is ensured that the voltages applied to the second electrode are distributed in a concentric circle.

By disposing the liquid crystal lens, a projection multiple of the preset pattern can be flexibly adjusted. When the target object is far away, the coverage area of the preset pattern may be reduced by changing a focal length, and spatial density of a coding image is maintained. When the target object is close, the coverage area of the preset pattern may be enlarged by changing the focal length.

The first adjustment module, the second adjustment module, and the liquid crystal lens cooperate with each other, so that a transmitting angle of the light beam and the size of the preset pattern can be adjusted, the preset pattern covers the target object in an appropriate size as much as possible, interference from another object other than the target object is reduced, and a signal-to-noise ratio is increased.

In some embodiments, the light transmitting mechanism 1 may include a vertical cavity surface emitting laser (Vertical Cavity Surface Emitting Laser, VCSEL), configured to transmit an infrared laser, for example, transmit a near-infrared laser light beam with a transmitting wavelength of 940/850 nm. After being expanded and collimated, the laser light beam is vertically transmitted into the first adjustment module 21 relative to a light inlet surface (an extension plane of the first substrate) of the first adjustment module 21.

In some embodiments, the diffraction mechanism 3 may include a diffractive optical element (Diffractive Optical Element, DOE), for example, a multi-line DOE module, a onedimensional lattice and linear DOE module, a two-dimensional lattice DOE module, a circular and circular lattice DOE module, a cross-line DOE module, or a random lattice DOE module. This is not limited in this application.

By disposing the angle adjustment mechanism, an emergent range of the first light is increased, and a detection field of view of the light projection apparatus is increased. By adjusting the angle of the first light, for example, a projection position of the first light can be correspondingly adjusted based on the shape of the target area, so that the preset pattern can cover the target area, and precision of the depth information is increased.

By disposing the size adjustment mechanism, the size of the preset pattern can be adjusted, for example, based on a size of the target area, so that density of the preset pattern in the target area is maintained within a specific range. This avoids a problem that a part of the target area is not covered by the preset pattern because the preset pattern is excessively sparse, and ensures detection precision of the structured light projection apparatus.

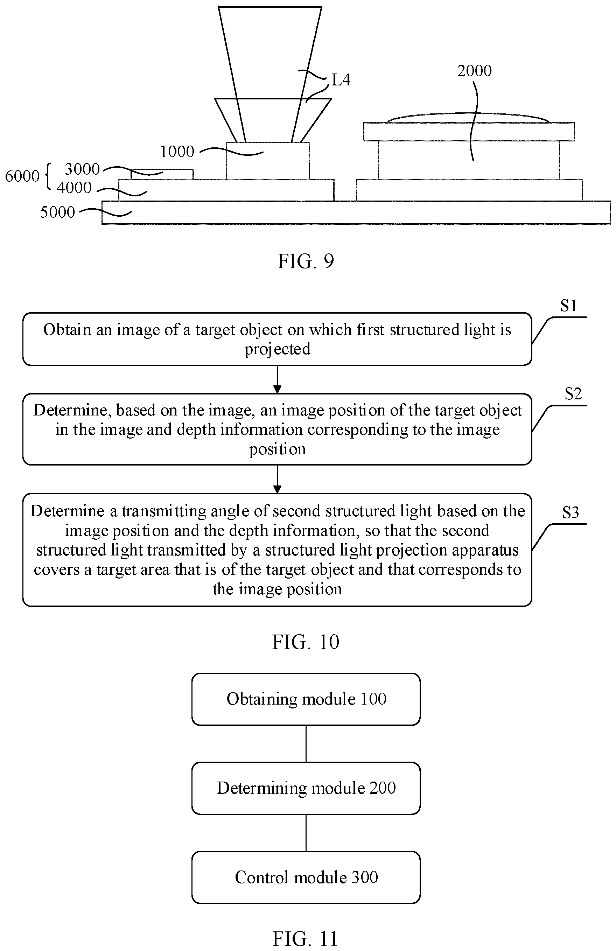

FIG. 9 is a schematic diagram of a structure of a depth camera according to an embodiment of this application. As shown in FIG. 9, the depth camera provided in this embodiment of this application may include a substrate 5000, a control apparatus 6000 disposed on the substrate 5000, a structured light projection apparatus 1000, and a camera 2000.

The control apparatus 6000 may include a printed circuit board 4000 (Printed Circuit Board, PCB) and a drive unit 3000. The drive unit 3000 is configured to drive an angle adjustment mechanism and a diffraction mechanism, to adjust a transmitting range of structured light L4.

In some embodiments, the camera 2000 may be a high-resolution wide-angle infrared camera, a focal length of the camera ranges from 13 mm to 38 mm, and an angle of view ranges from 60° to 118°.

The following describes a control method for a structured light projection apparatus according to an embodiment of this application with reference to FIG. 10. The control method for the structured light projection apparatus in this embodiment of this application may be performed by a terminal, for example, a terminal like an intelligent driving vehicle or a terminal like a depth camera, or may be an electronic apparatus applied in a terminal, for example, a system chip or a general-purpose chip.

As shown in FIG. 10, the control method for the structured light projection apparatus according to this embodiment of this application may include the following steps.

Step S1: Obtain an image of a target object on which first structured light is projected.

The target object may be a face, a hand, or the like, and an image with a preset pattern of the first structured light may be obtained by using a camera.

In some embodiments, a coverage area of the first structured light may be basically the same as an angle of view range of the camera. In this way, the structured light projection apparatus may roughly detect all objects in an entire angle of view range of the camera, to obtain images and depth information of all target objects in the entire angle of view range.

In some embodiments, the first structured light may be projected into a preset seat area in a vehicle cockpit. As shown in FIG. 1, the preset seat area may include, for example, a driver seat area A1, a co-driver seat area A2, a first rear seat area A3, a second seat area A4, and a third seat area A5. The foregoing areas A1, A2, A3, A4, and A5 are preset based on positions of seats in the vehicle cockpit.

In some embodiments, before step S1, the method may further include: obtaining a position of the target object in the vehicle cockpit; determining, based on the position, a preset seat area in which the target object is located; and transmitting the first structured light to the preset seat area.

The position of the target object in the vehicle cockpit is obtained based on one or more of the following: seat pressure information, seat belt fastening information, and vital sign information.

In some embodiments, the seat pressure information may be obtained by using a pressure sensor disposed in a seat cushion, or may be obtained by using a pressure sensor disposed on a back of a seat. A corresponding preset seat area may be set based on a position of the pressure sensor. For example, when pressure detected by a pressure sensor disposed on a driver seat exceeds a threshold, it is determined that the target object is located in the driver seat area A1, and the first structured light is transmitted to the driver seat area A1. The seat belt fastening information may be obtained by using a controller local area network signal, and a corresponding preset seat area may be set based on the controller local area network signal. When the controller local area network signal indicates that a seat belt of the co-driver seat is fastened, it is determined that the target object is located in the co-driver seat area A2, and the first structured light is transmitted to the co-driver seat area A2. The vital sign information may be obtained by using a radar sensor, and based on a position of a living body detected by the radar sensor, a preset seat area in which the position is located may be determined. For example, when the detected living body is located in a first rear seat, the first rear seat area A3 is determined as an area in which the target object is located, and the first structured light is transmitted to the first rear seat area A3.

Step S2: Determine, based on the image, an image position of the target object in the image and depth information corresponding to the image position.

The image may be recognized by using a neural network model, and the position of the target object in the image is recognized. For example, pixel coordinates of a face area in the image are recognized in a facial recognition manner, and depth information corresponding to the pixel coordinates is determined based on deformation of the preset pattern.

Step S3: Determine a transmitting angle of second structured light based on the image position and the depth information, so that the second structured light transmitted by the structured light projection apparatus covers a target area that is of the target object and that corresponds to the image position.

A coverage range of the second structured light is smaller than that of the first structured light. The structured light projection apparatus includes: a light transmitting mechanism configured to transmit first light, an angle adjustment mechanism configured to adjust an angle of the first light, and a diffraction mechanism configured to convert the first light that passes through the angle adjustment mechanism into structured light with a preset pattern. For detailed descriptions of a structure of the structured light projection apparatus, refer to the foregoing descriptions of the structured light projection apparatus provided in embodiments of this application. For brevity, details are not described herein again.

In some embodiments, based on pixel coordinates of a face area in the image and depth information corresponding to the pixel coordinates, a voltage of an electrode unit that corresponds to the pixel coordinates and that is of the angle adjustment mechanism may be determined. A transmitting angle of the second structured light is controlled by applying a corresponding voltage to the electrode unit, so that the second structured light can cover the face area. FIG. 11 is a schematic diagram of modules of a control apparatus for a structured light projection apparatus according to an embodiment of this application. As shown in FIG. 11, the control apparatus for the structured light projection apparatus according to this embodiment of this application includes the following modules:
an obtaining module 100, configured to obtain an image that is of a target object and that has first structured light, where the first structured light is projected in a preset seat area in a vehicle cockpit;
a determining module 200, configured to determine, based on the image, an image position of the target object in the image and depth information corresponding to the image position; and
a control module 300, configured to determine a transmitting angle of second structured light based on the image position and the depth information, so that the second structured light transmitted by the structured light projection apparatus covers a target area that is of the target object and that corresponds to the image position.

The structured light projection apparatus includes: a light transmitting mechanism configured to transmit first light, an angle adjustment mechanism configured to adjust an angle of the first light, and a diffraction mechanism configured to convert the first light that passes through the angle adjustment mechanism into structured light with a preset pattern.

In some embodiments, the obtaining module 100 is further configured to obtain a position of the target object in the vehicle cockpit; the determining module 200 is further configured to determine, based on the position, a preset seat area in which the target object is located; and the control module 300 is further configured to transmit the first structured light to the preset seat area.

In some embodiments, the position of the target object in the vehicle cockpit is obtained based on one or more of the following: seat pressure information, seat belt fastening information, and vital sign information.

For detailed descriptions of the obtaining module 100, the determining module 200, and the control module 300, refer to the related descriptions of the control method for the structured light projection apparatus provided in embodiments of this application. For brevity, details are not described herein again.

It should be noted that the foregoing modules, namely, the obtaining module 100, the determining module 200, and the control module 300, are configured to perform related steps of the foregoing method. For example, the obtaining module 100 is configured to perform related content of step S1, and the determining module 200 is configured to perform related content of step S2 and the like.

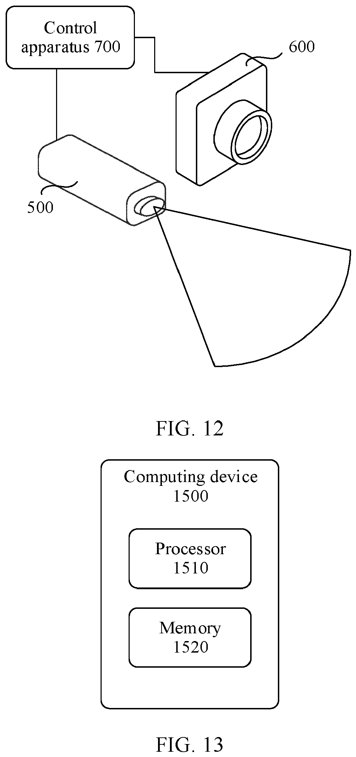

In this embodiment, the structured light projection apparatus is presented in a form of a module. The "module" herein may include an application specific integrated circuit (application specific integrated circuit, ASIC), a processor executing one or more software or firmware programs and a memory, an integrated logic circuit, and/or another device that can provide the foregoing functions. In addition, the obtaining module 100, the determining module 200, and the control module 300 may be implemented by using a computing device shown in FIG. 13.

FIG. 12 is a schematic diagram of modules of a structured light projection system according to an embodiment of this application. As shown in FIG. 12, the structured light projection system provided in this embodiment of this application includes: a structured light projection apparatus 500, a camera 600, and a control apparatus 700 for a structured light projection apparatus.

The camera 700 is configured to obtain an image of a target object on which first structured light is projected.

In some embodiments, both the structured light projection apparatus and the camera may be located at a position of a roof light switch, and the control apparatus may be located at a position of a center console, where the control apparatus may be in signal connection with the structured light projection apparatus in a wired or wireless manner. The control apparatus may be in signal connection with to the camera in a wired or wireless manner, and the control apparatus performs step S1 to step S3 based on the target object on which the first structured light is projected and that is obtained by the camera, to implement control on the structured light projection apparatus.

In the wired manner, for example, the signal connection between the control apparatus and the structured light projection apparatus and the signal connection between the camera and the control apparatus may be implemented by using an in-vehicle Ethernet interface, a controller local area network interface, or a differential signal interface.

In the wireless manner, for example, the signal connection between the control apparatus and the structured light projection apparatus and the signal connection between the camera and the control apparatus may be implemented in a Bluetooth or Wi-Fi manner.

FIG. 13 is a schematic diagram of a structure of a computing device 1500 according to an embodiment of this application. The computing device 1500 includes a processor 1510 and a memory 1520.

The processor 1510 may be connected to the memory 1520. The memory 1520 may be configured to store program code and data. Therefore, the memory 1520 may be a storage unit in the processor 1510, an external storage unit independent of the processor 1510, or a component including the storage unit in the processor 1510 and the external storage unit independent of the processor 1510.

Optionally, the computing device 1500 may further include a bus. The memory 1520 and a communication interface may be connected to the processor 1510 by using the bus. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like.

It should be understood that in this embodiment of this application, the processor 1510 may be a central processing unit (central processing unit, CPU). The processor may alternatively be another general-purpose processor, a digital signal processor (digital signal processor, DSP), an ASIC, a field programmable gate array (field programmable gate array, FPGA), or another programmable logic device, for example, a discrete gate, a transistor logic device, a discrete hardware component, or the like. The general-purpose processor may be a microprocessor, or the processor may be any conventional processor, or the like. Alternatively, the processor 1510 uses one or more integrated circuits to execute a related program, to implement the technical solutions provided in embodiments of this application.

The memory 1520 may include a read-only memory and a random access memory, and provide instructions and data to the processor 1510. A part of the processor 1510 may further include a non-volatile random access memory. For example, the processor 1510 may further store information of a device type.

When the computing device 1500 runs, the processor 1510 executes computer executable instructions in the memory 1520 to perform operation steps of the foregoing method.

It should be understood that the computing device 1500 according to this embodiment of this application may correspond to a corresponding body executing the methods according to embodiments of this application, and the foregoing and other operations and/or functions of each module in the computing device 1500 are separately intended to implement corresponding procedures of the methods in the embodiments. For simplicity, details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

An embodiment of this application further provides a computer-readable storage medium. The computer-readable storage medium stores a computer program. When the computer program is executed by a processor, the processor is enabled to perform a control method for a structured light transmitting apparatus, and the method includes at least one of the solutions described in the foregoing embodiments is implemented.

The computer storage medium in embodiments of this application may use any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or component, or any combination thereof. A more specific example (non-exhaustive list) of the computer-readable storage medium includes: an electrically connected or portable computer disk with one or more wires, a hard disk, a random access memory (RAM), a read-only memory (ROM), an erasable programmable read-only memory (EPROM or flash), an optical fiber, a portable compact disc read-only memory (CD-ROM), an optical storage device, a magnetic storage device, or any suitable combination thereof. In this document, the computer-readable storage medium may be any tangible medium that includes or stores a program, and the program may be used by or in combination with an instruction execution system, apparatus, or device.

A computer-readable signal medium may be included in a baseband or may be used as a data signal propagated as a part of a carrier, and carries computer-readable program code. The data signal propagated in this manner may be in a plurality of forms, including but not limited to an electromagnetic signal, an optical signal, or any suitable combination thereof. The computer-readable signal medium may alternatively be any computer-readable medium other than the computer-readable storage medium. The computer-readable medium may send, propagate, or transmit the program used by the instruction execution system, apparatus, or device, or used in combination with the instruction execution system, apparatus, or device.

The program code included in the computer readable medium may be transmitted by using any appropriate medium, including but not limited to a wireless medium, a wire, an optical cable, a radio frequency circuit, or any proper combination thereof.

Computer program code for performing the operations in this application may be written in one or more programming languages or a combination thereof. The programming languages include object-oriented programming languages-such as Java, Smalltalk, and C++, and further includes conventional process programming languages-such as the "C" language or similar programming languages. The program code may be completely executed on a user computer, partially executed on a user computer, executed as an independent software package, partially executed on a user computer and partially executed on a remote computer, or completely executed on a remote computer or server. In a case including a remote computer, the remote computer may be connected to a user computer through any type of network, including a local area network (LAN) or a wide area network (WAN); or may be connected to an external computer (for example, may be connected to the external computer through the Internet by using an Internet service provider).

In this specification and claims, the terms "first", "second", and the like are merely used to distinguish between similar objects, and do not represent a specific order of the objects. It may be understood that specific orders or sequences may be exchanged if permitted, so that embodiments of this application described herein can be implemented in an order other than an order illustrated or described herein.

The term "include" as used in the specification and claims should not be construed as being limited to the content listed below; and the term does not exclude other elements or steps. Accordingly, it should be interpreted as specifying the presence of the feature, whole, step or component mentioned, but does not preclude the presence or addition of one or more other features, wholes, steps or components and groups thereof. Therefore, the expression "device including apparatuses A and B" should not be limited to device consisting of only components A and B.

"One embodiment" or "an embodiment" mentioned in this specification means that a specific feature, structure, or characteristic described in combination with this embodiment is included in at least one embodiment of this application. Therefore, the term "in one embodiment" or "in an embodiment" appearing throughout this specification does not necessarily refer to a same embodiment, but may refer to a same embodiment. Further, in one or more embodiments, the particular features, structures, or characteristics can be combined in any suitable manner, as will be apparent to those of ordinary skill in the art from the present disclosure.

It should be noted that the foregoing is merely embodiments of this application and technical principles applied to the embodiments. A person skilled in the art may understand that this application is not limited to the specific embodiments described herein, and a person skilled in the art can make various obvious changes, adjustments, and replacements without departing from the protection scope of this application. Therefore, although this application is described in detail by using the foregoing embodiments, this application is not limited to the foregoing embodiments, and may further include more equivalent embodiments without departing from the concept of this application. All of the embodiments fall within the protection scope of this application.

## Claims

1. A structured light projection apparatus, comprising:
a light transmitting mechanism, configured to transmit first light;
an angle adjustment mechanism, configured to adjust an angle of the first light; and
a diffraction mechanism, configured to convert the first light that passes through the angle adjustment mechanism into second light with a preset pattern.

2. The apparatus according to claim 1, further comprising:
a size adjustment mechanism, configured to adjust a size of the second light, so that the second light covers a target area.

3. The apparatus according to claim 1 or 2, wherein the angle adjustment mechanism comprises a first adjustment module and a second adjustment module, and the second adjustment module is located between the first adjustment module and the diffraction mechanism;
the first adjustment module is configured to adjust the first light in a first angle range; and
the second adjustment module is configured to adjust the first light in a second angle range, wherein the second angle range is greater than the first angle range.

4. The apparatus according to claim 3, wherein the first adjustment module is further configured to split the first light into a plurality of light beams.

5. The apparatus according to claim 3 or 4, wherein the first adjustment module comprises a liquid crystal phased array.

6. The apparatus according to claim 2, wherein the size adjustment mechanism comprises a liquid crystal lens.

7. The apparatus according to any one of claims 1 to 6, wherein the structured light projection apparatus is installed in one or more of the following positions in a vehicle cockpit:
a center console, a position of a roof light switch, a side that is of a front seat and that faces a rear seat, and a central rearview mirror.

8. The apparatus according to any one of claims 1 to 6, wherein the structured light projection apparatus is installed in a mobile phone or a smart home terminal.

9. A depth camera, comprising a camera and the structured light projection apparatus according to any one of claims 1 to 8.

10. A control method for a structured light projection apparatus, comprising:
obtaining an image of a target object on which first structured light is projected;
determining, based on the image, an image position of the target object in the image and depth information corresponding to the image position; and
determining a transmitting angle of second structured light based on the image position and the depth information, so that the second structured light transmitted by the structured light projection apparatus covers a target area that is of the target object and that corresponds to the image position, wherein
the structured light projection apparatus comprises: a light transmitting mechanism configured to transmit first light, an angle adjustment mechanism configured to adjust an angle of the first light, and a diffraction mechanism configured to convert the first light that passes through the angle adjustment mechanism into structured light with a preset pattern.

11. The control method according to claim 10, wherein the first light is projected in a preset seat area in a vehicle cockpit.

12. The control method according to claim 11, wherein before the obtaining an image of a target object on which first structured light is projected, the method further comprises: obtaining a position of the target object in the vehicle cockpit;
determining, based on the position, the preset seat area in which the target object is located;
and
transmitting the first structured light to the preset seat area.

13. The control method according to claim 12, wherein the position of the target object in the vehicle cockpit is obtained based on one or more of the following:
seat pressure information, seat belt fastening information, and vital sign information.

14. A control apparatus for a structured light projection apparatus, comprising:
an obtaining module, configured to obtain an image of a target object on which first structured light is projected;
a determining module, configured to determine, based on the image, an image position of the target object in the image and depth information corresponding to the image position; and
a control module, configured to determine a transmitting angle of second structured light based on the image position and the depth information, so that the second structured light transmitted by the structured light projection apparatus covers a target area that is of the target object and that corresponds to the image position, wherein
the structured light projection apparatus comprises: a light transmitting mechanism configured to transmit first light, an angle adjustment mechanism configured to adjust an angle of the first light, and a diffraction mechanism configured to convert the first light that passes through the angle adjustment mechanism into structured light with a preset pattern.

15. The control apparatus according to claim 14, wherein the first structured light is projected in a preset seat area in a vehicle cockpit.

16. The control apparatus according to claim 15, wherein
the obtaining module is further configured to obtain a position of the target object in the vehicle cockpit;
the determining module is further configured to determine, based on the position, the preset seat area in which the target object is located; and
the control module is further configured to transmit the first structured light to the preset seat area.

17. The control apparatus according to claim 16, wherein the position of the target object in the vehicle cockpit is obtained based on one or more of the following:
seat pressure information, seat belt fastening information, and vital sign information.

18. A structured light projection system, comprising: the structured light projection apparatus according to any one of claims 1 to 8, a camera, and the control apparatus for the structured light projection apparatus according to claim 11, wherein the camera is configured to collect an image.

19. The structured light projection system according to claim 18, wherein
the control apparatus is in signal connection with the structured light projection apparatus by using one of the following: an in-vehicle Ethernet interface, a controller local area network interface, or a differential signal interface.

20. The structured light projection system according to claim 18, wherein
the camera is in signal connection with the structured light projection apparatus by using one of the following: an in-vehicle Ethernet interface, a controller local area network interface, or a differential signal interface.
